Europäisches Patentamt

European Patent Office

Office européen des brevets

(11) Veröffentlichungsnummer: **0 211 964 B1**

(12) **EUROPÄISCHE PATENTSCHRIFT**

(45) Veröffentlichungstag der Patentschrift:
18.01.89

(21) Anmeldenummer: **85109149.6**

(22) Anmeldetag: **22.07.85**

(51) Int. Cl.⁴: **G01M 1/08**, G01M 1/22

(54) Verfahren zur Bestimmung eines Winkels zwischen der Lage einer Unwucht und einer markanten Stelle und Einrichtung zur Durchführung des Verfahrens.

(43) Veröffentlichungstag der Anmeldung:
04.03.87 Patentblatt 87/10

(45) Bekanntmachung des Hinweises auf die Patenterteilung:
18.01.89 Patentblatt 89/3

(84) Benannte Vertragsstaaten:
DE FR IT

(56) Entgegenhaltungen:
DE-A- 1 423 989
DE-B- 1 247 047

(73) Patentinhaber: **CARL SCHENCK AG,**
**Landwehrstrasse 55 Postfach 40 18,**
**D-6100 Darmstadt(DE)**

(72) Erfinder: **Scheithe, Wolfgang, Dr., Eulerweg 32,**
**D-6103 Griesheim(DE)**

(74) Vertreter: **Brandt, Ernst-Ulrich, Fa. Carl Schenck AG**
**Patentabteilung Landwehrstrasse 55 Postfach 40 18,**
**D-6100 Darmstadt 1(DE)**

ACTORUM AG

**Beschreibung**

Die Erfindung bezieht sich auf ein Verfahren nach dem Oberbegriff des Patentanspruchs 1 und eine Einrichtung nach dem Oberbegriff des Patentanspruchs 4.

In der EP-A 0 045 505 ist als Stand der Technik ein stroboskopisches Verfahren zur Bestimmung der Winkellage einer Unwucht in einem auszuwuchtenden Bauteil sowie eine Einrichtung zur Durchführung des Verfahrens beschrieben. Das zu untersuchende Bauteil ist in Lagern drehbar gelagert. Ein Schwingungsumformer ermittelt die Wirkungen der Unwucht des rotierenden Bauteils und liefert Unwuchtmeßsignale an eine Signalaufbereitungseinheit, die aus dem im allgemeinen sinusartigen Unwuchtmeßsignal ein umlauffrequentes Impulssignal formt, das eine fest vorgegebene Phasenbeziehung zu dem Umwuchtmeßsignal hat und das als Zündimpuls für eine Stroboskoplampe dient, welche das rotierende Bauteil beleuchtet.

An dem Bauteil sind äquidistant längs des Umfangs verteilt Markierungen in Form von einzelnen Ziffern angebracht, die eine Winkelskala bilden und von denen die der Unwuchtlage zugeordnete Ziffer bei stroboskopischer Beleuchtung gegenüber einem nicht rotierenden Bezugselement scheinbar stillsteht, da die Entladung der Stroboskoplampe durch Impulse gezündet wird, die einmal pro Umdrehung des Bauteils geformt werden. Nach dem Stillstand des Rotors kann die Winkellage der Unwucht in Bezug auf das Bezugselement anhand der Winkelskala wieder aufgefunden werden, da die betreffende Ziffer die Unwuchtlage kennzeichnet. Die Genauigkeit, mit der die Winkellage bestimmbar ist, hängt von der gewählten Umfangsteilung und von der Übung des Bedienungpersonals ab.

In der DE-B 1 247 047 ist die Bestimmung von Größe und Phasenlage der Unwucht des zweipoligen Läufers einer Synchronmaschine mit unter anderem einem Wattmeter zur Schwingungsmessung und mit einem Drehstromtransformator mit phasenschwenkbarer Sekundärwicklung als Bezugsstromgeber beschrieben. Um den fehlenden Winkelbezug des Drehtransformator-Bezugsstromes zur Welle herzustellen, ist eine Stroboskoplampe zur Phasenerkennung des Bezugsstromes vorgesehen, die vom Bezugsstrom des Drehstromtransformators gesteuert wird. Über den Bezugsstrom des Drehstromtransformators wird nur der Referenzpunkt auf der Welle in eine vorbestimmbare Lage durch Einstellen der räumlichen Lage einer Bezugsachse verschoben, während die eigentliche Messung der Winkellage im Wattmeter über den von Drehstromtransformator gelieferten periodischen Bezugsstrom ohne Zuhilfenahme eines stroboskopischen Effekts erfolgt.

Die DE-A 1 423 989 offenbart ein Verfahren der eingangs genannten Art sowie eine Einrichtung zur Bestimmung eines Winkels zwischen der Lage einer Unwucht und einer markanten Stelle. Die Meßeinrichtung wird mittels Testunwuchten kalibriert. Die Meßeinrichtung weist dazu Meß- und Kalibrierkanäle auf, in denen Amplitudeneinsteller und Phasenschieber vorgesehen sind und die durch Umschalteeinrichtungen angewählt werden können. Während des Kalibrierens werden mittels Stelleinrichtungen Phasenverschiebungen für die Signale der Unwuchtaufnehmer eingestellt, so daß mit den Bauteilen der Meßeinrichtung schließlich vor Durchführung eines Meßlaufs eine bestimmte Phasenverschiebung als Kalibrierungskonstante für das Signal der Unwuchtaufnehmer über die Stelleinrichtungen bewirkt wird. In den Meßläufen werden dann die Unwuchten unter stroboskopischer Beleuchtung auf einer Winkelskala abgelesen. Die Genauigkeit, mit der die Winkellage bestimmbar ist, hängt von der gewählten Umfangsteilung und von der Übung des Bedienungspersonals ab.

Der Erfindung liegt die Aufgabe zugrunde, mit einfachen Mitteln die Genauigkeit bei der Bestimmung des Winkels zwischen der Unwuchtlage und einer markanten Stelle am auszuwuchtenden Bauteil zu verbessern.

Erfindungsgemäss wird diese Aufgabe mit den kennzeichnenden Merkmalen des Patentanspruchs 1 gelöst. Da der scheinbare Stillstand einer Markierung, die beispielsweise als strichförmige Marke mit großer Winkelauflösung ausgeführt sein kann, durch eine kontinuierlich erfolgende Phasenverschiebung des Zündzeitpunkts genau eingestellt wird, ergibt sich nicht der zu Ungenauigkeiten führende Fall, daß die Winkellage der Unwucht zwischen zwei der Teilungselemente der Skaleneinteilung der Winkelskala festgestellt wird. Die mit den erfindungsgemäßen Verfahren erzielte Genauigkeit der Winkeleinstellung führt in vorteilhafter Weise zu einer Reduzierung der Zahl der Auswuchtläufe bzw. einer Verbesserung des Unwuchtausgleichs, das heißt zu einer kleineren Restunwucht. Ein genaues Eindrehen auf eine zum Massenausgleich geeignete Position wird erleichtert und Unterbrechungen des Arbeitsablaufs zwischen Meßvorgang und Eindrehvorgang werden möglich. Die gespeicherten Meßwerte können ferner z. B. als die Unwucht nach Größe und Winkellage kennzeichnende Werte in einer Anzeigeeinheit angezeigt und bei Bedarf in Form eines Meßprotokolls festgehalten werden. Eine manuelle Eingabe der Phaseninformation für den Eindrehvorgang entfällt, Eingabefehler können somit nicht auftreten. Ferner ist der Zeitbedarf für einen Auswuchtvorgang verringert.

Besonders vorteilhaft im Hinblick auf das Auswuchten im Betriebszustand ist eine Weiterbildung des erfindungsgemäßen Verfahrens, bei dem vorgesehen ist, daß nach definiertem Ansetzen einer Testunwucht am zu untersuchenden Bauteil ein zweiter Meßlauf durchgeführt wird, daß der Zündzeitpunkt der Stroboskoplampe solange in seiner Phase zum im zweiten Meßlauf vorliegenden Unwuchtsignal verändert wird, bis die markante Stelle gegenüber dem Bezugselement stillzustehen scheint, und daß zur Bestimmung der Unwucht die im zweiten Meßlauf eingestellte Phasenverschiebung und das Unwuchtsignal sowie gespeicherte Werte des ersten Meßlaufs herangezogen werden. Beim Auswuchten im Betriebszustand wird zunächst in einem ersten Meßlauf mit der auszugleichenden Urunwucht ein bestimmter Schwingungszustand ermittelt. In einem zweiten Meßlauf mit einer in einer definierten Lage zusätzlich angebrachten Testunwucht bekannter Masse liegt ein veränderter Schwingungszustand vor. Die Auswertung dieser durch Schwingungsvektoren darstellbaren Schwingungszustände liefert die zum Ausgleich der Urunwucht erforderliche Ausgleichsmasse nach Größe und Winkellage. Die bei der Auswertung bisher übliche manuelle Eingabe der ermittelten Phasenverschiebung entfällt, da die im ersten Meßlauf ermittelte und gespeicherte Phasenverschiebung und die im zweiten Meßlauf ermittelte Phasenverschiebung ebenso wie die entsprechenden Unwuchtsignale zur Auswertung zur Verfügung stehen.

Eine vorteilhafte Weiterbildung des Verfahrens sieht vor, daß zum Unwuchtausgleich in mehreren Ausgleichsebenen Wirkungen der Unwucht in mehreren Meßebenen ermittelt werden.

Die der Erfindung zugrunde liegende Aufgabe wird bei einer Einrichtung, die im wesentlichen einen Schwingungsaufnehmer, eine Stroboskoplampe, eine Signalaufbereitungseinheit zur Formung eines Impulses für die Stroboskoplampe sowie einen von einer Steuereinheit steuerbaren Phasenschieber aufweist, erfindungsgemäß mit den kennzeichnenden Merkmalen des Patentanspruchs 4 gelöst. Eine mit dem rotierenden Bauteil umlaufende Marke wird durch die in dem Phasenschieber kontinuierlich erfolgende Veränderung des Zündzeitpunktes der Entladung einer Stroboskoplampe mit hoher Genauigkeit gegenüber einem nicht rotierenden Bezugselement zum scheinbaren Stillstand gebracht. Durch die vorgesehene Übernahme der ermittelten Werte entfällt eine manuelle Eingabe des Phasenwinkels und/oder des Unwuchtsignals und damit die Möglichkeit eines Fehlers bei der Eingabe. Ferner ist der Zeitbedarf für einen Auswuchtvorgang verringert.

Der mit der Größe der Phasenverschiebung beaufschlagte Eingang ist vorteilhaft mit dem Phasenschieber verbunden.

Ferner ist bei einer weiteren Ausgestaltung der Erfindung vorgesehen, daß der weitere Eingang mit einem Ausgang der Signalaufbereitungseinheit, an dem ein die Amplitude der Schwingung kennzeichnendes Signal anliegt, verbunden ist.

In einer die Bedienung erleichternden Weiterbildung ist vorgesehen, daß die Steuereinheit des Phasenschiebers an der Stroboskoplampe angeordnet ist; besonders bedienungsfreundlich ist dabei die Anordnung einer Einrichtung an der Steuereinheit, mit der die Übernahme der Größe der Phasenverschiebung manuell steuerbar ist.

Vorteilhaft im Hinblick auf ein Auswuchten im Betriebszustand ist eine Weiterbildung, bei der vorgesehen ist, daß die Auswerteeinheit ein Speicherelement aufweist, in dem die während des ersten Meßlaufs ermittelten Werte oder Auswerteergebnisse des ersten Meßlaufs während des zweiten Meßlaufs weiterverarbeitbar gespeichert sind.

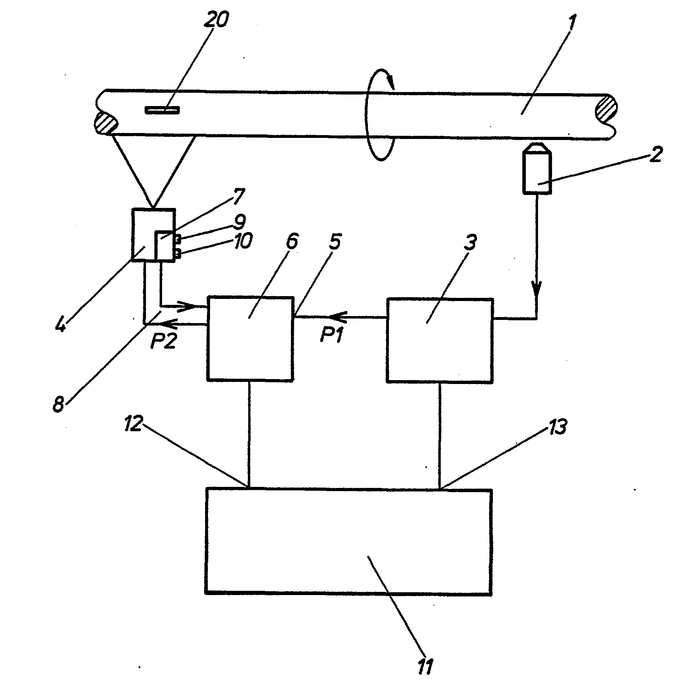

Im folgenden wird die Erfindung anhand eines in der Zeichnung dargestellten Ausführungsbeispiels näher erläutert.

In der Zeichnung ist ein rotierendes auszuwuchtendes Bauteil 1 schematisch dargestellt. Ein Schwingungsaufnehmer 2 tastet die durch die Unwucht hervorgerufenen Unwuchtschwingungen des Bauteils 1 ab und führt entsprechende, im allgemeinen sinusartig sich ändernde Meßwerte einer Signalaufbereitungseinrichtung 3 zu. Der Schwingungsaufnehmer 2 ist als berührungsloser Schwingweg-Aufnehmer ausgebildet und arbeitet beispielsweise nach dem Wirbelstromverfahren. Der Schwingungsaufnehmer kann jedoch auch an einem der Lagerelemente für das rotierende Bauteil 1 angeordnet sein und die Lagerschwingungen erfassen; in diesem Fall kommen vorzugsweise elektrodynamische oder piezoelektrische Aufnehmer zum Einsatz.

Die Signalaufbereitungseinrichtung 3 formt aus den vom Schwingungsaufnehmer 2 gelieferten Meßwerten z.B. durch Filterung in einen Bandpaßfilter und anschließender Formung zu Rechteck-Signalen mit nachfolgender Differenzierung Impuls-Signale $P_1$, wobei jeder Impuls $P_1$ einer markanten Stelle des Unwuchtsignals, z.B. dem Nulldurchgang nach einer Periode des umlauffrequenten Signals zugeordnet ist und als Steuerimpuls für eine Stroboskoplampe 4 zur Beleuchtung einer markanten Stelle 20 des Bauteils dient. Die markante Stelle 20 ist zweckmäßigerweise ein schmaler, parallel zur Achse des Bauteils verlaufender, am Umfang angebrachter Strich.

Die Signalaufbereitungseinrichtung 3 liefert ferner ein Signal, das der Amplitude der gefilterten Meßwerte zugeordnet ist und das die Größe der Unwucht charakterisiert.

Der von der Signalaufbereitungseinrichtung 3 gelieferte Impuls $P_1$ wird dem Eingang 5 eines Phasenschiebers 6 zugeführt, an dessen Ausgang ein Impuls $P_2$ ansteht. Mit dem Phasenschieber 6 ist die Phasenlage des Impulses $P_2$ bezüglich des sinusartigen Unwuchtsignals veränderbar. Der phasenverschobene Impuls $P_2$ wird der Stroboskoplampe 4 zugeführt und dient als Zündimpuls für die Blitzentladung der Stroboskoplampe 4.

Zur Abstimmung des Zündzeitpunktes mittels des Phasenschiebers 6 ist an der Stroboskoplampe 4 eine Steuereinheit 7 angeordnet, die über eine Steuerleitung 8 mit dem Phasenschieber 6 verbunden ist. Über zwei manuell betätigbare Tasten 9, 10 der Steuereinheit 7 läßt sich die Phasenverschiebung vergrößern bzw. verkleinern.

Der Phasenschieber 6 und die Signalaufbereitungseinrichtung 3 sind mit Eingängen einer eine Recheneinheit aufweisenden Auswerteeinheit 11 verbunden. In der Auswerteeinheit 11 werden das Amplitudensignal und das Phasenverschiebungssignal zur Bestimmung von Größe und Lage der Unwucht herangezogen. Die Auswerteeinheit 11 hat eine Speichereinheit, in der das Amplituden- und das Phasenverschiebungssignal bzw. die aufgrund ihrer Auswertung erhaltenen Größen jedes Meßlaufs weiterverarbeitbar speicherbar sind.

Beim Betriebsauswuchten in einer Ausgleichsebene wird zunächst ein erster Meßlauf mit der vorhandenen Urunwucht durchgeführt. Die markante Stelle am rotierenden Bauteil 1, die z. B. ein parallel zur Rotationsachse am Umfang angebrachter Kreidestrich ist, wird von der Stroboskoplampe 4 beleuchtet. Mittels der Tasten 9 und/oder 10 wird der Zündzeitpunkt der Stroboskoplampe 4 so justiert, daß der Kreidestrich gegenüber einem nicht rotierenden Bezugselement stillzustehen scheint. Die diesen Zündzeitpunkt bestimmende Phasenverschiebung zwischen dem Zündimpuls $P_2$ und dem bei z. B. dem Nulldurchgang des umlauffrequenten Unwuchtsignals geformten und dem Phasenschieber 6 eingangsseitig zugeführte Steuerimpuls $P_1$ wird vom Phasenschieber 6 nach Beendigung der Justierung infolge eines durch manuelle Betätigung einer Einrichtung an der Steuereinheit 7 gegebenen Signals der Auswerteinheit 11 zugeleitet und dort weiterverarbeitet bzw. weiterverarbeitbar gespeichert. Das in der Signalaufbereitungseinheit 3 geformte Amplitudensignal wird einem weiteren Eingang der Auswerteeinheit 11 zugeführt und dort weiterverarbeitet bzw. weiterverarbeitbar gespeichert. Aus diesen zugeführten Informationen wird in der Auswerteeinheit 11 ein die Unwucht nach Größe und Lage charakterisierender erster Schwingungsvektor ermittelt.

Durch das definierte Ansetzen einer Testunwucht ergibt sich ein bestimmter, den veränderten Unwuchtzustand charakterisierender, zweiter Schwingungsvektor. In einem zweiten Meßlauf werden die Phasen- und Amplitudenwerte dieses Schwingungsvektors ermittelt.

Aus den in beiden Meßläufen ermittelten Werten und den durch das definierte Ansetzen der Testunwucht zur Verfügung stehenden Daten läßt sich durch Vektoroperationen die Lage und der Betrag der zur Kompensation der Urunwucht erforderlichen Ausgleichsmasse bestimmen; diese Bestimmungen werden in der Auswerteeinheit 11 durch numerische Rechenoperationen durchgeführt.

Auf eine Eingabe der die Testunwucht kennzeichnenden Daten in die Auswerteeinheit kann verzichtet werden, wenn die Testmasse in gleicher Winkellage wie die markante Stelle angebracht wird; als Ergebnis erhält man den Betrag der Ausgleichmasse, bezogen auf die Testmasse und die Winkellage, bezogen auf die markante Stelle. Der Betrag der Masse der Testunwucht ist gegebenenfalls manuell in die Auswerteeinrichtung einzugeben, wenn ein Absolutbetrag der Ausgleichsmasse ermittelt werden soll. Wenn die Testunwucht unter einem Winkel zur markanten Stelle angebracht wird, ist die Eingabe der Winkellage der Testunwucht zur markanten Stelle erforderlich.

Das erfindungsgemäße Verfahren läßt sich vorteilhaft auch beim Betriebsauswuchten in mehreren Ebenen anwenden. Eine Anwendung bei Auswuchtmaschinen, in die der Rotor eingelagert wird, liegt ebenfalls im Rahmen der Erfindung.

**Patentansprüche**

1. Verfahren zur Bestimmung eines Winkels zwischen der Lage einer Unwucht an einem zu untersuchenden rotierenden Bauteil (1) und einer markanten Stelle (20) an dem zu untersuchenden Bauteil (1), bei dem Wirkungen der Unwucht mittels eines Schwingungsumformers (2) ermittelt werden und eine Stroboskoplampe (4) in Abhängigkeit eines vom Schwingungsumformer (2) ermittelten Unwuchtsignals gezündet wird, bei dem nach Definition der markanten Stelle (20) der Zündzeitpunkt der Stroboskoplampe (4) in seiner Phase zum Unwuchtsignal verändert wird, bis die markante Stelle (20) einem nicht rotierenden Bezugselement gegenübersteht, dadurch gekennzeichnet, daß das Signal für die in einem Meßlauf eingestellte Phasenverschiebung zwischen Zündzeitpunkt und Unwuchtsignal und ein aus dem Unwuchtsignal gewonnenes Amplitudensignal weiterverarbeitet und/oder weiterverarbeitbar gespeichert werden und daß das Signal für die Phasenverschiebung an eine Auswerteeinheit (3) zur Bestimmung des Unwuchtwinkels weitergeleitet wird.

2. Verfahren nach Anspruch 1, dadurch gekennzeichnet, daß nach definiertem Ansetzen einer Testunwucht am zu untersuchenden Bauteil (1) ein zweiter Meßlauf durchgeführt wird, daß der Zündzeitpunkt der Stroboskoplampe (4) solange in seiner Phase zur im zweiten Meßlauf vorliegenden Unwuchtsignal verändert wird, bis die markante Stelle (20) gegenüber dem Bezugselement stillzustehen scheint, und daß zur Bestimmung der Unwucht die im zweiten Meßlauf eingestellte Phasenverschiebung und das Unwuchtsignal sowie gespeicherte Werte des ersten Meßlaufs herangezogen werden.

3. Verfahren nach Anspruch 1 oder Anspruch 2, dadurch gekennzeichnet, daß zum Unwuchtausgleich in mehreren Ausgleichsebenen Wirkungen der Unwucht in mehreren Meßebenen ermittelt werden.

4. Einrichtung zur Durchführung des Verfahrens nach Anspruch 1 mit einem Auswuchtmeßgerät mit im wesentlichen einem Schwingungsaufnehmer (2), einer Stroboskoplampe (4) und einer Signalaufbereitungseinheit (3) zur Formung eines Impulses für die Stroboskoplampe (4), bei der ein von einer Steuereinheit (7) steuerbarer Phasenschieber (6) vorgesehen ist, dadurch gekennzeichnet, daß der Eingang (5) des Phasenschiebers (6) mit der einen Impuls ($P_1$) liefernden Signalaufbereitungseinheit (3) verbunden ist und am Ausgang des Phasenschiebers (6) ein gegenüber dem Impuls ($P_1$) phasenverschobener Zündimpuls ($P_2$) für die Stroboskoplampe (4) zur Verfügung steht, daß ein Eingang (12) der Auswerteeinheit (11) zur Übernahme des die Phasenverschiebung kennzeichnenden Signals mit einer diese Information liefernden Einheit verbunden ist, daß ein weiterer Eingang (13) der Auswerteeinheit (11) zur Übernahme des aus dem Unwuchtsignal gewonnenen Amplitudensignals mit einer diese Information liefernden Einheit verbunden ist, und daß die Auswerteeinheit (11) ein Speicherelement aufweist.

5. Einrichtung nach Anspruch 4, dadurch gekennzeichnet, daß der mit der Größe der Phasenverschiebung beaufschlagte Eingang (12) mit dem Phasenschieber (6) verbunden ist.

6. Einrichtung nach Anspruch 4, dadurch gekennzeichnet, daß der weitere Eingang (13) mit einem Ausgang der Signalaufbereitungseinheit (3), an dem das Amplitudensignal anliegt, verbunden ist.

7. Einrichtung nach einem oder mehreren der vorhergehenden Ansprüche 4 bis 6, dadurch gekennzeichnet, daß die Steuereinheit (7) des Phasenschiebers (6) an der Stroboskoplampe (4) angeordnet ist.

8. Einrichtung nach Anspruch 7, dadurch gekennzeichnet, daß an der Steuereinheit (7) eine Einrichtung vorgesehen ist, mit der die Übernahme der Grösse der Phasenverschiebung manuell steuerbar ist.

9. Einrichtung nach einem oder mehreren der vorhergehenden Ansprüche 4 bis 8, dadurch gekennzeichnet, daß die Auswerteeinheit (11) ein Speicherelement aufweist, in dem die während des ersten Meßlaufs ermittelten Werte oder Auswertungsergebnisse des ersten Meßlaufs während des zweiten Meßlaufs weiterverarbeitbar gespeichert sind.

**Claims**

1. A method for the determination of an angle between the position of an unbalance on a component (1) to be investigated and a marked position (20) on the component (1) to be investigated, in which effects of the unbalance are determined by means of an oscillation transducer (2) and a stroboscopic lamp (4) is ignited as a function of an unbalance signal determined by the oscillation transducer (2), in which, after definition of the marked place (20), the ignition of the stroboscopic lamp (4) is varied in its phase with respect to the unbalance signal, until the marked position (20) is opposite a non-rotating reference element, characterized in that the signal, set in a test run, for the phase shift between ignition time point and unbalance signal and an amplitude signal, obtained from the unbalance signal, are processed further and/or are stored in such a manner that they can be processed further and in that the signal for the phase shift is passed on further to an analysis unit (3) for the determination of the angle of unbalance.

2. A method according to Claim 1, characterized in that, after defined application of a test unbalance on the component (1) to be investigated, a second test run is carried out, in that the ignition time of the stroboscopic lamp (4) is varied so long in its phase with respect to the unbalance signal present in the second test run until the marked place (20) appears to stand still with respect to the reference element, and in that for the determination of the unbalance the phase shift set in the second test run and the unbalance signal as well as the stored values of the first test run are consulted.

3. A method according to Claim 1 or Claim 2, characterized in that for the unbalance correction in several correction (balancing) planes, effects of the unbalance are determined in several measuring planes.

4. An arrangement for carrying out the method according to Claim 1 with an unbalance measuring apparatus with substantially an oscillation transducer (2), a stroboscopic lamp (4) and a signal preparation unit (3) for the formation of a pulse for the stroboscopic lamp (4) in which is provided a phase shifter (6) controllable by a control unit (7), characterized in that the input (5) of the phase shifter (6) is connected to the signal preparation unit (3) supplying a pulse ($P_1$) and there is available at the output of the phase shifter (6) a phase-shifted ignition pulse ($P_2$) for the stroboscopic lamp (4), in that an analysis unit (11) is provided, in that an input (12) of the analysis unit (11) for the acceptance of the signal characterizing the phase shift is connected to a unit supplying this information, in that a further input (13) of the analysis unit (11) for the acceptance of the amplitude signal obtained from the unbalance signal is connected to a unit supplying this information, and in that the analysis unit (11) has a storage element.

5. An arrangement according to Claim 4, characterized in that the input (12) acted on by the value of the phase shift is connected to the phase shifter (6).

6. An arrangement according to Claim 4, characterized in that the further input (13) is connected to an output of the signal preparation unit (3) across which the amplitude signal is applied.

7. An arrangement according to one or more of the preceding Claims 4 to 6, characterized in that the control unit (7) of the phase shifter (6) is arranged at the stroboscopic lamp (4).

8. An arrangement according to Claim 7, characterized in that there is provided on the control unit (7) an arrangement by which the acceptance of the value of the phase shift is controllable manually.

9. An arrangement according to one or more of the preceding Claims 4 to 8, characterized in that the analysis unit (11) has a storage element in which the values or analysis results determined during the first test run are stored during the second test run in such a manner that they can be processed further.

**Revendications**

1. Procédé pour déterminer un angle entre la position d'un balourd sur un composant rotatif (1) à examiner et un point carastéristique (20) situé sur le composant (1) à examiner, dans lequel on détermine les effects du balourd au moyen d'un capteur convertisseur de vibrations (2) et on amorce une lampe stroboscopique (4) en fonction d'un signal de balourd déterminé par le convertisseur de vibrations (2), où, selon la définition du point caractéristique (20), on modifie la phase de l'instant d'amorçage de la lampe stroboscopique (4) par rapport au signal de balourd jusqu'à ce que le point caractéristique (20) soit en face d'un élément de référence non rotatif, caractérisé en ce que le signal pour le déphasage entre l'instant d'amorçage et un signal de balourd, établi au cours d'une opération de mesure, et un signal d'amplitude obtenu à partir du signal de balourd, subissant un traitement ultérieur et/ou sont mémorisés de façon à pouvoir subir un traitement ultérieur, et en ce que le signal pour le déphasage est transmis à une unité de traitement (3) pour la détermination de l'angle du balourd.

2. Procédé selon la revendication 1, caractérisé en ce qu'après le placement défini d'un balourd d'essai sur le composant (1) à examiner, on effectue une seconde opération de mesure, en ce qu'on modifie l'instant d'amorçage de la lampe stroboscopique (4), en ce qui concerne sa phase par rapport à un signal de balourd se présentant au cours de la seconde opération de mesure, jusqu'à ce que le point caractéristique (20) apparaisse immobile par rapport à l'élément de référence, et en ce que, pour déterminer le balourd on utilise le déphasage établi au cours de la seconde opération de mesure et le signal de balourd, ainsi que des valeurs mémorisées de la première opération de mesure.

3. Procédé selon la revendication 1 ou 2, caractérisé en ce que, pour la compensation du balourd dans plusieurs plans d'équilibrage, on détermine les effets du balourd dans plusieurs plans de mesure.

4. Dispositif pour mettre en oeuvre le procédé selon la revendication 1, comportant un appareil de mesure de balourd pourvu essentiellement d'un capteur de vibrations (2), d'une lampe stroboscopique (4) et d'une unité de remise en forme de signaux (3) pour former une impulsion pour la lampe stroboscopique (4), ou il est prévu un déphaseur (6) pouvant être commandé par une unité de commande (7), caractérisé en ce que l'entrée (5) du déphaseur (6) est reliée à l'unité de remise en forme du signal (3) fournissant une impulsion ($P_1$), et une impulsion d'amorçage ($P_2$) pour la lampe stroboscopique (4), déphasée par rapport à l'impulsion ($P_1$), est présente à la sortie du déphaseur (6), en ce qu'il est prévu une unité de traitement (11), en ce qu'une entrée (12) de l'unité de traitement (11) est reliée, pour le transfert du signal caractérisant le déphasage, à une unité fournissant cette information, en ce qu'une autre entrée (13) de l'unité de traitement (11) est reliée, pour le transfert du signal d'amplitude obtenu à partir du signal de balourd, à une unité fournissant cette information, et en ce que l'unité de traitement (11) comporte un élément de mémoire.

5. Dispositif selon la revendication 4, caractérisé en ce que l'entrée (12) à laquelle est appliquée la valeur du déphasage est reliée au déphaseur (6).

6. Dispositif selon la revendication 4, caractérisé en ce que l'autre entrée (13) est reliée à une sortie de l'unité de remise en forme du signal (3) à laquelle est appliqué le signal d'amplitude.

7. Dispositif selon une ou plusieurs des revendications 4 à 6 qui précèdent, caractérisé en ce que l'unité de commande (7) du déphaseur (6) est placée sur la lampe stroboscopique (4).

8. Dispositif selon la revendication 7, caractérisé en ce qu'il est prévu sur l'unité de commande (7) un dispositif permettant de commander manuellement le transfert de la valeur du déphasage.

9. Dispositif selon une ou plusieurs des revendications 4 à 8 qui précèdent, caractérisé en ce que l'unité de traitement (11) comporte un élément de mémoire dans lequel les valeurs ou résultats de traitement de la première opération de mesure, déterminées pendant la première opération de mesure, déterminées pendant la première opération de mesure, sont mémorisés pendant la seconde opération de mesure de façon à pouvoir subir un traitement ultérieur.